# EUROPÄISCHE PATENTSCHRIFT

(11) **EP 2 838 969 B1**
(45) Veröffentlichungstag und Bekanntmachung des Hinweises auf die Patenterteilung: **15.03.2017**
(21) Anmeldenummer: 13718500.5
(22) Anmeldetag: 12.04.2013
(51) Int. Cl.: C09K 3/22, C08F 251/00

(54) **VERWENDUNG EINER POLYMERDISPERSION ALS STAUBKONTROLLMITTEL**
USE OF A POLYMER DISPERSION AS DUST CONTROL AGENT
UTILISATION D'UNE DISPERSION DE POLYMÈRE EN TANT QU'AGENT DE LUTTE CONTRE LES POUSSIÈRES

(30) Priorität: 18.04.2012 DE 102012007827
(43) Veröffentlichungstag der Anmeldung: 25.02.2015
(73) Patentinhaber: Kurita Water Industries Ltd., Nakano-ku, Tokyo 164-0001 (JP)
(72) Erfinder: URSCHEY, Michael, 47807 Krefeld (DE); LUNKENHEIMER, Rudolf, 55263 Wackernheim (DE); STEPHAN, Tim, 67117 Limburgerhof (DE)
(74) Vertreter: Reitstötter Kinzebach
(86) Internationale Anmeldenummer: PCT/EP2013/001080
(87) Internationale Veröffentlichungsnummer: WO 2013/156127

(56) Entgegenhaltungen:
- US-A- 4 642 196
- DATABASE WPI Week 200330 Thomson Scientific, London, GB; AN 2003-302077 XP002698514, -& CN 1 390 908 A (BEIJING ACAD CITY BUILDING ENG) 15. Januar 2003 (2003-01-15)

## Beschreibung

Die vorliegende Erfindung betrifft die Verwendung polymerer Staubkontrollmittel zur Reduktion von Staubemissionen bei der Verladung, Lagerung, Transport, Handhabung und Nutzung von staubenden Feststoffen aller Art.

Zu solchen Feststoffen gehören unter anderem Kohle, Koks, Erz, Metallstaub, Sand, Erde, Asche, Mineralstoffe, Schwefel, Schlacke, Düngemittel und bestimmte Arten von Müll, beispielsweise Sperrmüll. Andere Güter, wie Stäube bei der Kohleförderung müssen aus Umwelt- und Gesundheitsaspekten möglichst rasch gebunden werden, damit die Stäube nicht eingeatmet werden müssen. Staubemissionen aus Lagerhalden oder Transportflächen müssen aus denselben Gründen vermieden werden.

Grundsätzlich sind viele Arten von organischen und anorganischen Stäuben, insbesondere Feinstäube, beim Einatmen sehr gesundheitsschädlich (Gefahr der Silikose, "Staublunge" und verwandte Krankheitsbilder). Staubemissionen sind daher im industriellen und öffentlichen Umfeld ganz allgemein zu minimieren.

Es gibt im Stand der Technik viele unterschiedliche Lösungsansätze, um Staub zu binden und Staubemissionen zu vermeiden und zu kontrollieren.

Eines der einfachsten Mittel ist, Wasser, welches oft mit Zusätzen wie wasserlöslichen Lösemitteln, Wachsen oder Tensiden vermischt wird, zur Befeuchtung der Oberfläche aufzusprühen, um die Stäube zu binden. Aber auch Rückstände aus der Erdöldestillation wie Steinkohlenteerpech finden Verwendung.

Wasser allein ist immer nur so lange aktiv, bis es vollständig verdunstet ist. Dadurch ergibt sich in ariden Klimazonen eine sehr kurze Einsatzmöglichkeit.

In der US 4,417,992 werden flüssige Dispersionen von wässriger Konsistenz von hochverzweigten, Wasser quellbaren Polymeren, basierend auf Acrylamid oder Acrylamid/Acrylsäure Copolymeren, die mit Monomeren vernetzt sind, die mehr als eine ethylenisch ungesättigte Gruppe enthalten, verwendet. Die Polymere liegen hierbei als gelartige Mikropartikel in einer Ölphase, bestehend aus z.B. Paraffin oder Mineralöl, vor.

In der US 4,746,543 werden zum gleichen Zwecke wasserlösliche anionische Acrylpolymere in Mischung mit wasserlöslichen nichtionischen Polyalkylenglykolen zusammen mit nichtionischen und anionischen Tensiden verwendet.

In der EP 305 621 B1 wird ein staubbindendes Mittel beschrieben, bestehend aus Wasser, das ein Verdickungsmittel wie Stärke oder Polyhydroxymethylcellulose enthält, und Steinkohlenteerpech, welcher in Anthracenöl gelöst ist. Eine solche Dispersion verfestigt zwar die Oberfläche, ist jedoch aufgrund des aromatischen Lösungsmittels hochgradig umweltschädigend und inakzeptabel.

In US 5,194,174 wird vorgeschlagen, ein Staub kontrollierendes Agens, bestehend aus Polyvinylalkohol und Borsäure, durch Aufsprühen oder Aufschäumen auf die Oberfläche der jeweiligen Stäube zu verwenden. Diese wässrige, nicht viskose Lösung, enthält neben Weichmacher und Vernetzer, auch noch Feuchthalte- und Schaummittel. Der Einsatz von Borsäure ist jedoch nicht mehr akzeptabel, weil es sich bei Borsäure um eine Substanz handelt, die von der europäischen Chemikalienagentur ECHA auf die Liste der "substances of very high concern" (SVHC) gesetzt wurde.

In der Düngemittelindustrie werden Wachse und spezielle Wachsmischungen als Staubbindemittel und zur Verbesserung der Rieselfähigkeit von Granulaten verwendet. Feste Düngemittel neigen zuweilen zu starker Staubbildung. Wachse können dazu beitragen, dass die Staubbelastung und die Verluste der Feinstpartikeln minimiert werden. Zusätze zur Erhöhung der Rieselfähigkeit sind nötig, da einige feste Düngemittel wegen ihrer hygroskopischen Eigenschaften zum Verblocken neigen. Hierbei können spezielle Wachsmischungen die technischen Lösungen bei Verarbeitungs-, Lagerungs- als auch Dosierungsproblemen bieten.

In der WO 2009151316 werden Beschichtungsmittel beschrieben, um die Oberfläche von Schüttgütern zu bedecken und dabei zu verfestigen. Die hier zum Einsatz kommenden Verbindungen bestehen aus Destillationsrückständen von Biodiesel Methyl oder Ethylester von natürlichen Fettsäuren und verwandten Produkten, wie Glycerinester, aber auch aus Rückständen von Destillationsprozessen von Fettsäuren, Fettalkoholen, Fettaminen und Fettamiden. Gemäß Anspruch 1 können diese Produkte in der allg. Formel ((FA)ₚ-X))_{q} zusammengefasst werden, worin FA ein gesättigtes oder ungesättigtes C₈-C₂₄ Fettalkyl ist, mit 0 bis 5, bevorzugt 0 bis 3 C=C Gruppen in der Kette, X ist ein Rest, ausgewählt aus -C(O)OH, -C(O)OR, -NH₂-, NHC(O)R¹, NHC(O)OH, -OH, -COR und p = 1 bis 1000, bevorzugt 1 bis 3 und q = 1 bis 1000, bevorzugt 2 bis 5, mit der Maßgabe, dass p und q nicht gleichzeitig 1 sind, R ist eine kurzkettige Alkylgruppe, R¹ ist H oder ein kurzkettige Alkylgruppe.
Zu den Verbindungen gehören unter anderem Phosphorsäureester, Polymere der 1,4 ungesättigten C4 bis C14 Carbonsäuren oder Carbonsäureanhydriden, wie Maleinsäure, Maleinsäureanhydrid, Itaconsäure und Citraconsäure.

Tensidhaltige, Schaum produzierende Antistaubmittel, werden auch in US 04780233 und US 4897218 beschrieben. Diese Mittel haben grundsätzlich den Nachteil, dass aufgrund der Wasserlöslichkeit der Tenside diese durch Regen in das Grundwasser gespült werden und dadurch umweltschädigend sind. Dies betrifft vor allem Mittel, welche Nonylphenolethoxylate enthalten.

AU 2007216657 beschreibt die Anwendung von fluorhaltigen Polymeren, speziell Polytetrafluoräthylen (PTFE). Derartige Fluorpolymere sind extrem schwer abbaubar und verbleiben persistent in der Umwelt, was eine nachhaltige Schädigung derselben verursachen kann. Diese Mittel sind deshalb absolut inakzeptabel

CN 101824303 A beschreibt zum Zwecke der Staubbindung auf Kohlehalden ein Acrylsäure und Methylen-bis-Acrylamid enthaltendes Polymerisat, welches in Gegenwart von Stärke hergestellt wurde. Dieses Mittel wird als wässrige Lösung mit Hilfe eines Sprühgerätes auf die Kohlenhalden aufgesprüht.

In CN 101497782 A wird eine Lösung, bestehend aus Polyacrylsäure, Polyacrylamid, Tensiden und Wasser verwendet. Das Mittel kann als Frostschutzmittel und zur Staubbindung eingesetzt werden, es wird in ähnlicher Weise wie das Mittel aus CN 101824303 durch Aufsprühen auf die Oberflächen angewendet.

In der CN 101333431 werden zum Zwecke der Staubbindung und Sandfixierung modifizierter Melamin-Formaldehyd Verbindungen verwendet.

In der CN 102093846 werden zur Staubkontrolle beim Verladen von Phosphaterzen Mittel eingesetzt, welche Polyvinylalkohol, Guaran, ein Mikrobizid und Wasser enthalten. In der CN 102093847 wurde eine Zusammensetzung zur Unterdrückung der Staubbildung bei der Eisenerzverarbeitung offenbart. Demnach besteht diese polymere Verbindung aus 1 bis 10 Gew.-% Butadien-Styrol Copolymeren, 0,5 bis 5 Gew.-% wasserlöslicher Natriumcarboxymethylcellulose, Polyvinylalkohol, modifizierterer Stärke oder Polyacrylamid. Weiterhin sind als oberflächenaktive Mittel Natriumdodecylbenzolsulfonat und Kokosfettsäurediethanolamid enthalten.

US 4,642,196 beschreibt ein Verfahren zur Staubkontrolle bei der Produktion, der Verarbeitung, dem Transport und der Lagerung von Kohle, bei dem eine wässrige Lösung einer gelierten Stärke aufgesprüht wird. Emulsionspolymerisate aus Stärke mit Styrol oder Styrolderivaten werden in US 4,642,196 nicht beschrieben.

Viele im Stand der Technik beschriebenen Mittel enthalten toxische Substanzen wie Borsäure, Acrylamid (als Restmonomer) oder Steinkohlenteer oder sind ökologisch bedenklich durch Gehalte an z.B. Tensiden, Mineralöl, Destillationsrückständen oder Fluor-haltigen Polymeren. Oder es werden aufwendig spezielle Polymere hergestellt; diese Polymere sind aber oft sehr teuer für die Staubkontrolle.

Es bestand daher die Aufgabe, ökonomisch und ökologisch günstige Staubkontrollmittel zu finden, welche gleichzeitig
- effektiv, sicher und vielseitig einsetzbar
- nicht toxisch für die Umwelt
- Phosphor-, und Halogen-frei
- Tensid-frei
- zumindest partiell auf nachwachsenden Rohstoffen basierend, sowie
- kostengünstig herzustellen sind.

Die oben geschilderten Nachteile können durch das erfindungsgemäß verwendete Staubkontrollmittel, welches eine Polymerdispersion ist, gelöst werden. Dieses Mittel erfüllt die oben genannten Forderungen zu 100 %.

Zu erwähnen ist auch, dass diese Verbindungsklasse bei der Papier- und Kartonherstellung z.B. als Oberflächenleimungsmittel verwendet wird und, abhängig von der Monomerzusammensetzung, gemäß XXXVI. Empfehlung des BfR für Papiere in Kontakt mit Lebensmittel zugelassen ist.

Das erfindungsgemäß verwendete Staubkontrollmittel stellt eine Polymerdispersion dar, die durch radikalisch initiierte Emulsionspolymerisation der Komponenten a bis e erhältlich ist, wobei
a. 2 - 75 Gew% Styrol und/oder substituiertes Styrol und
b. 0 bis 75 Gew% Acrylsäure C1- bis C12-Ester und/oder Methacrylsäure C1 bis C12-Ester und
c. 0 bis 50 Gew% Acrylnitril und/oder Methacrylnitril und
d. 0 bis 50 Gew% mindestens eines weiteren copolymerisierbaren ethylenisch ungesättigten Monomeren mit einer oder mehreren C-C Doppelbindungen in Gegenwart von
e. 10 bis 75 Gew% Stärke und/oder modifizierter Stärke und/oder abgebauter Stärke und/oder abgebauter modifizierter Stärke
in Wasser polymerisiert werden, wobei die Summe aus a+b+c+d+e 100 Gew% ergeben und das Gewichtsverhältnis Wasser zu der Summe der Massenanteile a+b+c+d+e zwischen 99:1 und 40:60 liegt,
wobei in Gruppe d die Monomere mit mehr als einer Doppelbindung ausgewählt sind aus Methylenbisacrylamid, Polyalkylenglykoldi(meth)acrylaten und Triallylamin.

Als Monomere der Gruppe a kommen neben Styrol auch substituierte Styrole wie z.B. α-Methylstyrol, oder auch C1- bis C4-Alkyl substituierte Styrole wie Vinyltoluol in Frage. Bevorzugt wird Styrol verwendet. Zur Gruppe b gehören die Acryl- und/oder Methacrylsäureester z.B. Methylacrylat, Methylmethacrylat, Ethylacrylat, Ethylmethacrylat, n-Proplyacrylat, iso-Propylyacrylat, n-Butylmethacrylat, n-Butylacrylat, iso-Butylmethacrylat, tert.-Butylacrylat, isoButylacrylat.
Aber auch höhere Derivate wie n-Pentylacrylate, n-Pentylmethyacrylat, Neopentylacrylat, Cyclohexylacrylat, Cyclohexylmethacrylat, 2-Hexylacrylat, 2-Hexylmethacrylat 2-Ethylhexylacrylat, 2-Ethylhexylmethacrylat, n-Octylacrylat, n-Octylmethacrylat, Isooctylacrylat, Isooctylmethacrylat, n-Dodecylacrylat, n-Dodeecylmethacrylat, Dodecylacrylat, Dodecylmethacrylat können eingesetzt werden. Bevorzugt werden die C1- bis C4-Ester der Acrylsäure und/oder Methacrylsäure, besonders bevorzugt n-Butylacrylat und/oder tert.-Butylacrylat und/oder Methylmethacrylat verwendet.

Als Monomere der Gruppe c eignen sich Acrylnitril und/oder Methacrylnitril.

Als Monomere der Gruppe d eignen sich alle Monomeren, welche von a, b und c verschieden sind. Es eignen sich beispielsweise Acrylsäure, Methacrylsäure, Acrylamid, Methacrylamid, Vinylacetat, Vinylpropionat, N-Vinylpyrrolidon, N-Vinylimidazol, N-Vinylformamid, Hydroxyethylacrylat oder Hydroxylethylmethacrylat. Desweiteren können auch Monomere wie Dialkylaminoethylacrylat, Dialkylaminoethylmethacrylat, Dialkylaminoalkyl(meth)acrylat, Dialkylaminoalkyl(meth)acrylamide, Dimethylaminoproply(meth)acrylat, etc. eingesetzt werden. Weiterhin sind auch quarternisierte Monomere wie z.B. Trimethylammoniumethylmethacrylatchlorid einsetzbar. Zur Gruppe d zählen auch solche Monomere, die mehr als eine C-C Doppelbindung enthalten, ausser Butadien, welche als Vernetzer Verwendung finden. Hierzu gehören bevorzugt Methylenbisacrylamid, Polyalkylenglykoldi(meth)acrylate oder Triallylamin. Welches Monomer eingesetzt wird, hängt im Wesentlichen von der gewünschten Funktionalität, der Verfügbarkeit und vom Preis ab.

Die Polymerisation der Monomere erfolgt in Wasser in Gegenwart von Stärke, deren bevorzugte Molmasse zwischen 1000 und 50000 D liegt.
Die Stärke umfasst alle Arten von Stärken wie Mais-, Tapioka-, Kartoffel-, Weizen-, Reis-, Sorghumstärke etc.

Die Stärken können nichtionisch und/oder anionisch und/oder kationisch modifiziert, verestert und/oder verethert und/oder vernetzt sein. Bevorzugt werden abgebaute native oder modifizierte Stärken, wobei der Abbau vorzugsweise vor der Polymerisation erfolgt. Der Stärkeabbau kann z.B. oxidativ, thermisch oder enzymatisch vorgenommen werden. Man kann auch Mischungen aller oben genannten Stärken einsetzen, sofern sie kompatibel sind. Der Anteil der Stärke bzgl. der Monomere a bis d beträgt vorzugsweise zwischen 20 und 500 Gew.-%. Der Feststoffgehalt der wässrigen Polymerdispersion liegt bevorzugt über 10 Gew.%, besonders bevorzugt über 25 Gew.%, die Viskosität bevorzugt unter 1000 mPas, besonders bevorzugt unter 500 mPas. Die mittlere Teichengröße der dispergierten Teilchen liegt bevorzugt unter 1000 nm, besonders bevorzugt unter 500 nm.
Die radikalisch initiierte Emulsionspolymerisation erfolgt gemäß dem Stand der Technik durch Verwendung entsprechender Initiatoren gegebenenfalls in Gegenwart von Reglern. Die bei der Emulsionspolymerisation geltenden Regeln nach dem Stand der Technik werden nachfolgend nicht expressiv aufgezählt, gelten aber im Rahmen dieser Erfindung analog.

Als eine wesentliche Auftragstechnik auf die staubenden Oberflächen aller Art, kommt das Aufsprühen mit Hilfe von mobilen Sprühgeräten in Frage; mit dieser Technik lässt sich das Mittel fein und homogen auf die Oberflächen auftragen. Es ist wichtig, dass das Mittel zur Belegung der Oberfläche möglichst sparsam verwendet werden kann, weshalb es von Vorteil ist, dass die Polymerdispersion, die aus ökologischen und ökonomischen Gründen als Konzentrat hergestellt und vertrieben wird, eine niedrige Viskosität bei hohem Feststoffgehalt aufweist und sich problemlos vor Ort verdünnen lässt.

Die folgenden Möglichkeiten der Anwendung sind nicht beschränkend oder abschließend, denkbar ist die Anwendung auf jeder Art von staubender Oberfläche. Beispielhaft werden jedoch genannt:
Kohle, Koks, Erz, Metallstaub, Sand, Erde, Asche, Mineralstoffe, Schwefel, Schlacke, Düngemittel oder Müll, unbefestigte Straßen, Tagebau, Steinbrüche, industrielle Lagerflächen, land- und forstwirtschaftlich genutzte Flächen,
Staubkontrolle auf Helikopterlande- und Serviceplätzen, Flugplätze,
Transport von Stäuben auf offenen Lastwagen, Zugwagons oder Schiffen, Staubkontrolle beim Abriss von Gebäuden, Sportplätze, z.B. Tennis, Golf und Rennbahnen.

Nachfolgende Beispiele erläutern die Herstellung der erfindungsgemäße verwendeten Staubkontrollmittel.

Herstellung des erfindungsgemäß verwendeten Staubkontrollmittels.

### Beispiel 1:

Perglutin A 288 (Stärke gepfropftes Styrol-Acrylat-Copolymer der Fa. BK-Giulini GmbH)

### Beispiel 2

In einem 1 I-Planschliffkolben mit Rührer, Rückflußkühler und Mantelheizung werden 87 g kationisierte Kartoffelstärke (DS ca. 0,07; Emcat C60 der Fa. Emsland Stärke) in 578,5 g entcarbonisiertem Wasser dispergiert.

Unter Rühren werden 6g einer 8,3%igen Calciumacetatlösung, 60mg Kupfersulfat-Pentahydrat gelöst in 7,5g entcarbonisiertem Wasser und danach 20g 15%ige Natriumpersulfat-Lösung zugegeben.

Nach beendeter Zugabe heizt man das Gemisch auf 80°C und rührt 30 min bei dieser Temperatur, man erhält eine klare bis leicht trübe Stärkelösung.

Nach Zugabe von 200mg Silikonentschäumer mit 1g entcarbonisiertem Wasser beginnt man mit der Dosierung der Monomere und des Initiators bei einer Innentemperatur von ca. 83°C.

Der Monomerzulauf besteht aus einer Mischung von 189g Styrol und 47,4g n-Butylacrylat und wird in 240 Minuten gleichmäßig zu dosiert.

Als Initiator werden 49,725g einer 10,6%igen Wasserstoffperoxid-Lösung in 255 Minuten zu dosiert.

Nach Ende des Monomerzulaufs wird die Zuleitung mit 9,055g entcarbonisiertem Wasser gespült.

Nach Beendigung der Initiatordosierung gibt man 60mg Eisen(II)Sulfat gelöst in 3g entcarbonisiertem Wasser hinzu.

Nach zehn Minuten Rühren werden 0,5g tert-Butylhydroperoxid-Lösung (70%ig in Wasser) zugegeben und noch 1 h bei ca. 83°C nachgerührt und dann abgekühlt.

Zur Konservierung werden dem Produkt 1g 24%ige Glutardialdehyd-Lösung zugesetzt.

Man filtriert über ein 100 µm Sieb und erhält eine Dispersion mit einem Feststoffgehalt von 31,4%.

Die erhaltene Dispersion weist eine Viskosität von 10mPa*s (Brookfield LV Spindel 1 60 U/min) und einen pH-Wert von 2 auf.

### Beispiel 3

In einem 1 I-Planschliffkolben mit Rührer, Rückflußkühler und Mantelheizung werden 285 g oxydativ abgebaute Kartoffelstärke (Amylex 15 der Fa. Südstärke) in 404,72 g entcarbonisiertem Wasser dispergiert.

Unter Rühren werden 0,07g einer Amylase (Multifect AA18L der Firma Genencor) verdünnt mit 5,21g entcarbonisiertem Wasser zugegeben.

Nach beendeter Zugabe heizt man das Gemisch innerhalb 1 h auf 55°C und dann in 20 min auf 75°C. Man rührt 2h bei dieser Temperatur und erhält eine klare bis leicht trübe Stärkelösung.

Nach Zugabe von 500mg Formaldehydlösung (35%ig) wird in 30 min auf eine Innentemperatur von ca. 90°C erwärmt.

Nach Zugabe von 2,75g Natriumpersulfat, gelöst in 6,2g entcarbonisiertem Wasser, beginnt man mit der Dosierung der Monomere, bestehend aus einer Mischung von 40,5g Styrol und 0,9g Acrylsäure.

Diese werden in 40 Minuten gleichmäßig zu dosiert.

Nach Ende des Zulaufs wird noch 1 h nachgerührt, bevor 0,85g Formaldehydsulfoxylat Natriumsalz (Rongalit C) in 5g entcarbonisiertem Wasser zugegeben werden.

Man dosiert gleichzeitig 135g Styrol und 5g

Trimethylammoniumethylmethacrylatchlorid (75%ig), gelöst in 20g entcarbonisiertem Wasser, in 120 Minuten zu. Gleichzeitig starten als Initiatorzulauf 42g einer 12,1%igen Wasserstoffperoxid-Lösung, die in 240 Minuten zu dosiert werden.

Nach Ende des Monomerzulaufs wird die Zuleitung mit 5g entcarbonisiertem Wasser gespült.

Nach Beendigung der Initiatordosierung strippt man 30 min bei ca. 90°C, ergänzt danach 8,5g entcarbonisiertes Wasser und kühlt auf 30°C ab.

Der pH-Wert wird mit Natronlauge auf ca. 4 eingestellt, und überschüssiges Wasserstoffperoxid wird durch Zugabe von Natriumbisulfitlösung vernichtet.

Anschließend werden 1g Synperonic T701, 1g Formaldehydlösung (35%ig) und 0,5g Glutardialdehydlösung (24%ig) zugesetzt. Man filtriert über ein 100 µm Sieb und erhält eine Dispersion mit einem Feststoffgehalt von 44,2%

Die erhaltene Dispersion weist eine Viskosität von 210mPa*s (Brookfield LV Spindel 2 60 U/min) und einen pH-Wert von 4 auf.

### Beispiel 4

In einem 1 I-Planschliffkolben mit Rührer, Rückflußkühler und Mantelheizung werden 60 g native Kartoffelstärke der Fa. Südstärke in 595 g entcarbonisiertem Wasser dispergiert.

Unter Rühren werden 12g einer 4,2%igen Calciumacetatlösung, 60mg Kupfersulfat-Pentahydrat, gelöst in 7,5g entcarbonisiertem Wasser, und danach 3g Wasserstoffperoxid 30%ig zugegeben.

Nach beendeter Zugabe heizt man das Gemisch auf 80°C und rührt 30 min bei dieser Temperatur, man erhält eine klare bis leicht trübe Stärkelösung.

Nach Zugabe von 200mg Silikonentschäumer mit 1g entcarbonisiertem Wasser beginnt man mit der Dosierung der Monomere und des Initiators bei einer Innentemperatur von ca. 83°C.

Die Monomerzuläufe bestehen aus:
a) einer Mischung von 118,2g Styrol, 59,1g n-Butylacrylat, 59,1g tert-Butylacrylat und 1 g Acrylsäure
b) einer Mischung von 7,5g Trimethylammoniumethylmethacrylatchlorid (75%ig) mit 12,5g entcarbonisiertem Wasser

Als Initiator werden 49,725g einer 10,6%igen Wasserstoffperoxid-Lösung in 255 Minuten zu dosiert.

Nach Ende des Monomerzulaufs werden die Zuleitungen mit 10,075g entcarbonisiertem Wasser gespült.

Nach Beendigung der Initiatordosierung gibt man 60mg Eisen(II)Sulfat gelöst in 3g entcarbonisiertem Wasser hinzu und rührt noch 1 h bei ca. 83°C nach.

Nach Abkühlung auf 30°C werden zur Konservierung dem Produkt 1g 24%ige Glutardialdehyd-Lösung zugesetzt. Man filtriert über ein 100 µm Sieb und erhält eine Dispersion mit einem Feststoffgehalt von 29,9%

Die erhaltene Dispersion weist eine Viskosität von 27mPa*s (Brookfield LV Spindel 1, 60 U/min) und einen pH-Wert von 2,8 auf.

Bei der Verwendung des erfindungsgemäßen Staubkontrollmittels gibt es mehrere Möglichkeiten des Auftrages. Die Polymerdispersion kann vor der Verwendung mit Wasser verdünnt werden, wobei eine Lösung / Dispersion definierter Konzentration entsteht, die dann chargenweise versprüht wird. Das Polymerisat kann aber auch kontinuierlich mit Hilfe eines Venturi-Ventils oder eines statischen Mischers oder eines anderen geeigneten Bauteils in den zu versprühenden Wasserstrom eingemischt werden.
Zur Staubkontrolle während des Transportes von staubenden Feststoffen oder Substraten, welche auf Förderbändern transportiert werden, wird die wässrige Dispersion kontinuierlich auf das transportierte Material durch Sprühdüsen aufgetragen. Dabei können die Sprühdüsen sich oberhalb eines längeren Abschnittes des Förderbandes befinden, oder an einem Transferpunkt, an dem das Substrat von einem Förderband auf ein tieferliegendes oder den Erdboden / Lagerendpunkt fällt.
Zur Staubkontrolle von unbefestigten Straßen, z. B. in Tagebau, Steinbrüchen, industriellen Lagerflächen, land- und forstwirtschaftlich genutzten Flächen oder von Sportstätten oder Helikopter- oder Flugplätzen etc. wird die Dispersion mit Hilfe eines mit einer Sprühausrüstung versehenen Tankwagens während der Fahrt auf die Oberflächen aufgesprüht. Diese Aufzählung ist nicht beschränkend, jede Art von Oberfläche von staubenden Feststoffen kann mit dem erfindungsgemäßen Staubkontrollmittel behandelt werden.

Die folgenden Beispiele beschreiben die wichtigsten Arten der Anwendung:

### Beispiel 5 Verwendung des Staubkontrollmittels hergestellt nach Bsp. 1:

Ein trockener Haufen Steinkohle mit hohem Staubanteil wurde mit 2 l/m² einer 5 V% igen wässrigen Dispersion von Bsp. 1 besprüht und über Nacht trocknen gelassen. Ein weiterer Haufen wurde nur mit Wasser behandelt. Nach ca. 12 h Trocknungszeit wurde die Windresistenz des Haufens mittels eines handelsüblichen Haarföns getestet, indem der Fön auf die höchste Stufe eingestellt und 30 s lang ca. 1 cm vom Haufen entfernt gehalten wurde, wobei verschiedene Orientierungen (Windrichtungen) abgedeckt wurden. Der mit dem Mittel nach Bsp. 1 behandelte Haufen blieb stabil und es traten keine signifikanten Staubemissionen auf. Der nur

mit Wasser behandelte Haufen dagegen wurde komplett fortgeweht. Die Effizienz der Behandlung (Staubreduktion) betrug > 99 %.
Die mechanische Stabilität der Deckschickt wurde durch manuelles Drücken aus verschiedenen Orientierungen bestimmt. Im Gegensatz zum Haufen, der nur mit Wasser behandelt wurde, wies der mit dem Mittel aus Bsp. 1 behandelte Haufen eine signifikante mechanische Stabilität auf, wobei sich eine mehrere mm dicke Kruste gebildet hatte. Sodann wurde an einer noch unbeschädigten Stelle der Kruste die wasserabweisende Wirkung der Deckschicht durch Auftropfen kleiner Wassertropfen getestet. Im Vergleich zum nur mit Wasser behandelten Haufen wies der mit dem Mittel aus Bsp. 1 behandelte Haufen eine erhöhte wasserabstoßende Wirkung auf.

### Beispiel 6

Wie in Beispiel 5, wurde jetzt als Substrat Seesand verwendet.
Effizienz der Behandlung: > 99 %

### Beispiel 7

Wie in Beispiel 5 wurde jetzt als Substrat Rohphosphat verwendet.
Effizienz der Behandlung: > 75 %

### Beispiel 8 großtechnische Feldversuch

Behandelt wurde eine Lagerfläche von Rohphosphat, Länge ca. 30 m, Breite ca. 5 m, Höhe ca. 4 m. Als Applikationsgerät wurde ein mobiles Sprühgerät, Modell "Dust Boss DB 30" der Firma DeDusting Technology (Waldkirch, Deutschland) eingesetzt. Das Mittel aus Bsp. 1 wurde mit Hilfe einer mechanischen Proportionalpumpe kontinuierlich zu ca. 5 % in den gesprühten Wasserstrom eingemischt. Der Dustboss wurde auf Schwenkmodus gestellt und unter Berücksichtigung der Windrichtung so eingestellt, dass an einem Standort eine Fläche von ca. 30 - 40 m² mit einer Dosierung von ca. 2 l/m² besprüht wurde. Nach ca. 3 h Trocknungszeit wurde die Oberfläche begutachtet. Dabei wurde festgestellt, dass diese sich mehrere mm tief verfestigt hatte. Unter den gegebenen Witterungsverhältnissen (mäßiger Wind) wurden keine Staubemissionen beobachtet.

Mit den Staubkontrollmitteln aus den Beispielen 2 bis 4 wurden analog zu Beispiel 5 folgende Versuche gemacht:

**Tabelle 1:**

| Beispiel | Staubkontrollmittel | Substrat | Effizienz |
|---|---|---|---|
| Beispiel 9 | aus Beispiel 2 | Seesand | 90 % |
| Beispiel 10 | aus Beispiel 3 | Seesand | 90 % |
| Beispiel 11 | aus Beispiel 4 | Seesand | 75 % |
| Beispiel 12 | aus Beispiel 2 | Kohle | > 99 % |
| Beispiel 13 | aus Beispiel 3 | Kohle | > 99 % |
| Beispiel 14 | aus Beispiel 4 | Kohle | > 99 % |

## Patentansprüche

1. Verwendung einer Polymerdispersion als Staubkontrollmittel, **dadurch gekennzeichnet, dass** die Polymerdispersion durch radikalisch initiierte Emulsionspolymerisation der Komponenten a bis e erhältlich ist, wobei
a. 2 - 75 Gew% Styrol und/oder substituiertes Styrol und
b. 0 bis 75 Gew% Acrylsäure C1- bis C12-Ester und/oder Methacrylsäure C1 bis C12-Ester und
c. 0 bis 50 Gew% Acrylnitril und/oder Methacrylnitril und
d. 0 bis 50 Gew% mindestens eines weiteren copolymerisierbaren ethylenisch ungesättigten Monomeren mit einer oder mehreren C-C Doppelbindungen in Gegenwart von
e. 10 bis 75 Gew% Stärke und/oder modifizierter Stärke und/oder abgebauter Stärke und/oder abgebauter modifizierter Stärke
in Wasser polymerisiert werden, wobei die Summe aus a+b+c+d+e 100 Gew% ergeben und das Gewichtsverhältnis Wasser zu der Summe der Massenanteile a+b+c+d+e zwischen 99:1 und 40:60 liegt,
wobei in Gruppe d die Monomere mit mehr als einer Doppelbindung ausgewählt sind aus Methylenbisacrylamid, Polyalkylenglykoldi(meth)acrylaten und Triallylamin.

2. Verwendung einer Polymerdispersion als Staubkontrollmittel nach Anspruch 1, **dadurch gekennzeichnet, dass** als Monomere a. bis d. bevorzugt Styrol gegebenenfalls in Kombination mit n-Butylacrylat und/oder tert. Butylacrylat und/oder Acrylnitril und/oder Acrylsäure verwendet werden.

3. Verwendung einer Polymerdispersion als Staubkontrollmittel nach den Ansprüchen 1 und 2, **dadurch gekennzeichnet, dass** als Stärke eine abgebaute native und/oder eine abgebaute modifizierte Stärke mit einer Molmasse von 1000 bis 50000D verwendet wird.

4. Verwendung einer Polymerdispersion als Staubkontrollmittel nach den Ansprüchen 1 bis 3, **dadurch gekennzeichnet, dass** der Anteil der Stärke zu den Monomeren a. bis d. vorzugsweise bei 20 bis 500 Gew.% liegt.

5. Verwendung einer Polymerdispersion als Staubkontrollmittel nach den Ansprüchen 1 bis 4, **dadurch gekennzeichnet, dass** die Polymerdispersion einen Feststoffgehalt von mindestens 10Gew%, eine Viskosität von höchstens 1000mPas und einen pH-Wert von 1 bis 11, bevorzugt von 2 bis 9 hat und die mittlere Teilchengröße der Polymerpartikel kleiner 1µm ist.

6. Verwendung nach Anspruch 1 als Staubkontrollmittel von stark bis mittel stark staubenden Feststoffen, **dadurch gekennzeichnet, dass** das Emulsionspolymerisat in Form einer wässrigen Dispersion homogen auf die Oberfläche der zu behandelnden Substrate aufgesprüht oder in diese eingesprüht wird.

7. Verwendung nach Anspruch 1, **dadurch gekennzeichnet, dass** es sich bei den zu behandelnden Substraten um alle Arten von staubenden Feststoffen handelt.

8. Verwendung nach Anspruch 1, **dadurch gekennzeichnet, dass** die Konzentration der wässrigen Dispersion bei der Anwendung bevorzugt 0,5 bis 3 % beträgt.

9. Verwendung nach Anspruch 1, **dadurch gekennzeichnet, dass** das Staubkontrollmittel pro qm zu behandelnder Oberfläche in einer Menge von 0,2 bis 3 I / qm aufgetragen wird.

## Claims

1. The use of a polymer dispersion as a dust control agent, **characterized in that** the polymer dispersion is obtainable by the free radical initiated emulsion polymerization of the components a to e, wherein
a. 2 to 75% by weight of styrene and/or substituted styrene, and
b. 0 to 75% by weight of C1 to C12 esters of acrylic acid and/or C1 to C 12 esters of methacrylic acid, and
c. 0 to 50% by weight of acrylonitrile and/or methacrylonitrile, and
d. 0 to 50% by weight of at least one further copolymerizable, ethylenically unsaturated monomer with one or more carbon-carbon double bonds in the presence of
e. 10 to 75% by weight of starch and/or modified starch and/or degraded starch and/or degraded, modified starch
are polymerized in water, the sum of a+b+c+d+e being 100% by weight and the ratio by weight of water to the sum of the parts by weights of a+b+c+d+e being between 99 : 1 and 40 : 60,
the monomers in group d with more than one double bond being selected from methylene bisacrylamide, polyalkylene glycol di(meth)acrylates and triallyl-amine.

2. The use of a polymer dispersion as a dust control agent of claim 1, **characterized in that** preferably styrene, optionally in combination with n-butyl acrylate and/or t-butyl acrylate and/or acrylonitrile/or acrylic acid, is used as monomers a to d.

3. The use of a polymer dispersion as a dust control agent of claims 1 and 2, **characterized in that** a degraded native and/or a degraded modified starch with a molecular weight of 1000 to 50,000 D is used as starch.

4. The use of a polymer dispersion as a dust control agent of claims 1 to 3, **characterized in that** the proportion of starch to the monomers a. to d. preferably is 20% to 500% by weight.

5. The use of a polymer dispersion as a dust control agent of the claims 1 to 4, **characterized in that** the polymer dispersion has a solids content of at least 10% by weight, a viscosity of not more than 1000 mPas and a pH of 1 to 11 and preferably of 2 to 9 and that the average size of the polymer particles is less than 1 µm.

6. The use according to claim 1 as a dust-controlling agent of solids dusting moderately to strongly, **characterized in that** the emulsion polymer, in the form of an aqueous dispersion, is sprayed homogeneously onto the surface of or into the substrates which are to be treated.

7. The use according to claim 1, **characterized in that** the substrates which are to be treated are any type of dusting solid.

8. The use according to claim 1, **characterized in that** the concentration of the aqueous dispersion is preferably 0.5 to 3% when applied.

9. The use according to claim 1, **characterized in that** the dust control agent is applied in an amount of 0.2 to 3 L per m² of the surface to be treated.

## Revendications

1. Utilisation d'une dispersion polymère en tant qu'agent de lutte contre la poussière, **caractérisée en ce que** la dispersion polymère peut être obtenue par polymérisation en émulsion initiée radicalairement des composants a à e, selon laquelle
a. 2 à 75 % en poids de styrène et/ou de styrène substitué, et
b. 0 à 75 % en poids d'esters en C1 à C12 de l'acide acrylique et/ou d'esters en C1 à C12 de l'acide méthacrylique, et
c. 0 à 50 % en poids d'acrylonitrile et/ou de méthacrylonitrile, et
d. 0 à 50 % en poids d'au moins un autre monomère éthyléniquement insaturé copolymérisable contenant une ou plusieurs doubles liaisons C-C, sont polymérisés dans de l'eau en présence de
e. 10 à 75 % en poids d'amidon et/ou d'amidon modifié et/ou d'amidon décomposé et/ou d'amidon modifié décomposé,
la somme de a + b + c + d + e étant de 100 % en poids et le rapport en poids entre l'eau et la somme des proportions massiques a + b + c + d + e étant compris entre 99:1 et 40:60,
dans le groupe d, les monomères contenant plus d'une double liaison étant choisis parmi le méthylène-bisacrylamide, les di(méth)acrylates de polyalkylène glycol et la triallylamine.

2. Utilisation d'une dispersion polymère en tant qu'agent de lutte contre la poussière selon la revendication 1, **caractérisée en ce que** le styrène éventuellement en combinaison avec de l'acrylate de n-butyle et/ou de l'acrylate de tert.-butyle et/ou de l'acrylonitrile et/ou de l'acide acrylique sont utilisés de préférence en tant que monomères a. à d.

3. Utilisation d'une dispersion polymère en tant qu'agent de lutte contre la poussière selon les revendications 1 et 2, **caractérisée en ce qu'**un amidon naturel décomposé et/ou un amidon modifié décomposé ayant une masse molaire de 1 000 à 50 000 D sont utilisés en tant qu'amidon.

4. Utilisation d'une dispersion polymère en tant qu'agent de lutte contre la poussière selon les revendications 1 à 3, **caractérisée en ce que** la proportion de l'amidon par rapport aux monomères a. à d. est de préférence de 20 à 500 % en poids.

5. Utilisation d'une dispersion polymère en tant qu'agent de lutte contre la poussière selon les revendications 1 à 4, **caractérisée en ce que** la dispersion polymère présente une teneur en solides d'au moins 10 % en poids, une viscosité d'au plus 1 000 mPas et un pH de 1 à 11, de préférence de 2 à 9, et la taille de particule moyenne des particules polymères est inférieure à 1 µm.

6. Utilisation selon la revendication 1 en tant qu'agent de lutte contre la poussière de solides formant fortement ou moyennement fortement de la poussière, **caractérisée en ce que** le polymère en émulsion est pulvérisé de manière homogène sous la forme d'une dispersion aqueuse sur la surface des substrats à traiter ou pulvérisé dans ceux-ci.

7. Utilisation selon la revendication 1, **caractérisée en ce que** les substrats à traiter sont tout type de solides formant de la poussière.

8. Utilisation selon la revendication 1, **caractérisée en ce que** la concentration de la dispersion aqueuse lors de l'utilisation est de préférence de 0,5 à 3 %.

9. Utilisation selon la revendication 1, **caractérisée en ce que** l'agent de lutte contre la poussière est appliqué par m² de surface à traiter en une quantité de 0,2 à 3 l/m².
